# EUROPEAN PATENT APPLICATION

(11) **EP 3 876 561 A1**
(43) Date of publication of application: **08.09.2021**
(21) Application number: 20275053.5
(22) Date of filing: 05.03.2020
(51) Int. Cl.: H04W 4/029, H04W 4/02, H04W 4/38

(54) **ELECTRONIC DEVICE CONTROL**

(71) Applicant: Nokia Technologies Oy, 02610 Espoo (FI)
(72) Inventor: MIN, Chulhong, Cambridge, Cambridgeshire CB2 9AE (GB)
(74) Representative: Swindell & Pearson Limited

(57) **Abstract**

An apparatus comprising means for continuously monitoring real-world social interactions of a user and/or continuously monitoring usage, by the user, of at least one electronic device; determining a current activity of the user based, at least in part, on data obtained by the continuous monitoring of real-world social interactions of the user and/or continuous monitoring of usage, by the user, of the at least one electronic device; causing storage of, at least, information indicative of the determined current activity in at least one data structure; and enabling access to the at least one data structure for any suitably configured program of an electronic device to enable any suitably configured program of the electronic device to control operation of the electronic device based, at least in part, on the data stored in the at least one data structure.

## Description

### TECHNOLOGICAL FIELD

Embodiments of the present disclosure relate to electronic device control. In particular, embodiments of the present disclosure relate to enabling control of an electronic device based, at least in part, on real-world social interactions of a user of the electronic device.

### BACKGROUND

Electronic devices are often kept with users during users' daily lives. However, appropriate control of a user's electronic device or devices can, for example, vary in dependence on the person or people that the user of the device is currently with.

It is challenging for developers to design and implement programs or applications that both accurately monitor and determine the current activity or social context of the user and appropriately control an electronic device of the user based on the determination.

### BRIEF SUMMARY

According to various, but not necessarily all, embodiments there is provided an apparatus comprising means for:
continuously monitoring real-world social interactions of a user and/or continuously monitoring usage, by the user, of at least one electronic device;
determining a current activity of the user based, at least in part, on data obtained by the continuous monitoring of real-world social interactions of the user and/or continuous monitoring of usage, by the user, of the at least one electronic device; causing storage of, at least, information indicative of the determined current activity in at least one data structure; and
enabling access to the at least one data structure for any suitably configured program of an electronic device to enable any suitably configured program of the electronic device to control operation of the electronic device based, at least in part, on the data stored in the at least one data structure.

In some but not necessarily all examples, continuously monitoring real-world social interactions of the user comprises determining one or more people who are co-located with the user.

In some but not necessarily all examples, continuously monitoring real-world social interactions of the user comprises periodically scanning for nearby devices of other users.

In some but not necessarily all examples, continuously monitoring real-world social interactions of the user comprises identifying at least one other user of a nearby device based, at least in part, on information stored in an electronic device of the user and/or input from the user.

In some but not necessarily all examples, continuously monitoring real-world social interactions of the user comprises determining a current location of the user.

In some but not necessarily all examples, determining a current location of the user comprises controlling one or more sensors of an electronic device.

In some but not necessarily all examples, determining a current activity of the user comprises segmenting data obtained by the continuous monitoring of real-world social interactions of the user and/or continuous monitoring of usage, by the user, of the at least one electronic device.

In some but not necessarily all examples, the data is segmented based, at least in part, on periods of time that the user remains co-located with at least one other person.

In some but not necessarily all examples, determining a current activity of the user comprises using a model that takes, as inputs, at least one of: who the user is currently with, the current time and the current location of the user and outputs the current activity of the user.

In some but not necessarily all examples, enabling access to the at least one data structure comprises providing at least one interface to enable any suitably configured program of an electronic device to access data in the at least one data structure.

In some but not necessarily all examples, enabling access to the at least one data structure comprises providing at least one application program interface.

In some but not necessarily all examples, the means are further configured to:
access the at least one data structure and control operation of an electronic device based, at least in part, on the data stored in the at least one data structure.

In some but not necessarily all examples, controlling operation of the electronic device comprises preventing display of at least one notification on the electronic device.

According to various, but not necessarily all, embodiments there is provided an electronic device comprising an apparatus as described herein.

According to various, but not necessarily all, embodiments there is provided an apparatus comprising at least one processor; and
at least one memory including computer program code, the at least one memory and the computer program code configured to, with the at least one processor, cause the apparatus to perform:
continuously monitoring real-world social interactions of a user and/or continuously monitoring usage, by the user, of at least one electronic device;
determining a current activity of the user based, at least in part, on data obtained by the continuous monitoring of real-world social interactions of the user and/or continuous monitoring of usage, by the user, of the at least one electronic device;
causing storage of, at least, information indicative of the determined current activity in at least one data structure; and
enabling access to the at least one data structure for any suitably configured program of an electronic device to enable any suitably configured program of the electronic device to control operation of the electronic device based, at least in part, on the data stored in the at least one data structure.

According to various, but not necessarily all, embodiments there is provided an apparatus comprising at least one processor; and
at least one memory including computer program code, the at least one memory and the computer program code configured to, with the at least one processor, cause the apparatus to perform, at least, one or more methods described herein.

According to various, but not necessarily all, embodiments there is provided a method comprising:
continuously monitoring real-world social interactions of a user and/or continuously monitoring usage, by the user, of at least one electronic device;
determining a current activity of the user based, at least in part, on data obtained by the continuous monitoring of real-world social interactions of the user and/or continuous monitoring of usage, by the user, of the at least one electronic device; causing storage of, at least, information indicative of the determined current activity in at least one data structure; and
enabling access to the at least one data structure for any suitably configured program of an electronic device to enable any suitably configured program of the electronic device to control operation of the electronic device based, at least in part, on the data stored in the at least one data structure.

In some but not necessarily all examples, continuously monitoring real-world social interactions of the user comprises determining one or more people who are co-located with the user.

In some but not necessarily all examples, continuously monitoring real-world social interactions of the user comprises periodically scanning for nearby devices of other users.

In some but not necessarily all examples, continuously monitoring real-world social interactions of the user comprises identifying at least one other user of a nearby device based, at least in part, on information stored in an electronic device of the user and/or input from the user.

In some but not necessarily all examples, continuously monitoring real-world social interactions of the user comprises determining a current location of the user.

In some but not necessarily all examples, determining a current location of the user comprises controlling one or more sensors of an electronic device.

In some but not necessarily all examples, determining a current activity of the user comprises segmenting data obtained by the continuous monitoring of real-world social interactions of the user and/or continuous monitoring of usage, by the user, of the at least one electronic device.

In some but not necessarily all examples, the data is segmented based, at least in part, on periods of time that the user remains co-located with at least one other person.

In some but not necessarily all examples, determining a current activity of the user comprises using a model that takes, as inputs, at least one of: who the user is currently with, the current time and the current location of the user and outputs the current activity of the user.

In some but not necessarily all examples, enabling access to the at least one data structure comprises providing at least one interface to enable any suitably configured program of an electronic device to access data in the at least one data structure.

In some but not necessarily all examples, enabling access to the at least one data structure comprises providing at least one application program interface.

In some but not necessarily all examples, the method comprising:
accessing the at least one data structure and controlling operation of an electronic device based, at least in part, on the data stored in the at least one data structure.

In some but not necessarily all examples, controlling operation of the electronic device comprises preventing display of at least one notification on the electronic device.

According to various, but not necessarily all, embodiments there is provided a computer program that, when run on a computer, performs:
continuously monitoring real-world social interactions of a user and/or continuously monitoring usage, by the user, of at least one electronic device;
determining a current activity of the user based, at least in part, on data obtained by the continuous monitoring of real-world social interactions of the user and/or continuous monitoring of usage, by the user, of the at least one electronic device;
causing storage of, at least, information indicative of the determined current activity in at least one data structure; and
enabling access to the at least one data structure for any suitably configured program of an electronic device to enable any suitably configured program of the electronic device to control operation of the electronic device based, at least in part, on the data stored in the at least one data structure.

According to various, but not necessarily all, embodiments there is provided a computer program that, when run on a computer, performs, at least, one or more methods as described herein.

According to various, but not necessarily all, embodiments there is provided a non-transitory computer readable medium comprising program instructions for causing an apparatus to perform at least one or more methods as described herein.

According to various, but not necessarily all, embodiments there is provided a computer product comprising program instructions for causing an apparatus to perform at least one or more methods as described herein.

### BRIEF DESCRIPTION

Some examples will now be described with reference to the accompanying drawings in which:
FIG. 1 shows an example of the subject-matter described herein;
FIG. 2 shows another example of the subject-matter described herein;
FIG. 3 shows another example of the subject-matter described herein;
FIG. 4 shows another example of the subject-matter described herein; and
FIG. 5 shows another example of the subject-matter described herein.

### DETAILED DESCRIPTION

Examples of the disclosure relate to control of an electronic device and/or enabling control of an electronic device.

In examples real-world social interactions of a user and/or usage, by the user, of at least one electronic device are continuously monitored and a current activity of the user determined, based, at least in part, on the data obtained by the continuous monitoring.

In examples, information indicative of the determined current activity is stored in at least one data structure and access to the at least one data structure enabled, for any suitably configured program of an electronic device, to enable operation of the device to be controlled based, at least in part, on the stored data.

At least some of the figures illustrate an apparatus 10 comprising means for: continuously monitoring real-world social interactions 16 of a user 12 and/or continuously monitoring usage, by the user 12, of at least one electronic device 14; determining a current activity 18 of the user 12 based, at least in part, on data 20 obtained by the continuous monitoring of real-world social interactions of the user 12 and/or continuous monitoring of usage, by the user 12 of the at least one electronic device 14;
causing storage of, at least, information 22 indicative of the determined current activity 18 in at least one data structure 24; and
enabling access to the at least one data structure 24 for any suitably configured program of an electronic device 13 to enable any suitably configured program of the electronic device 13 to control operation of the electronic device 13 based, at least in part, on the data 20 stored in the at least one data structure 24.

In examples, the electronic device 13 that is controlled can be the electronic device 14 of the user 12. That is, in examples, the electronic device 14 that is controlled to perform monitoring of real-world social interactions 16 of a user and/or the usage of which is monitored can be the electronic device 13 that is controlled based, at least in part, on the data 20 stored in the at least one data structure 24.

The apparatus 10 according to examples of the disclosure therefore enables accurate and efficient monitoring and determination of user activities to enable other programs, such as applications, to appropriately control operation of an electronic device.

This provides and/or enables provision of improved control of an electronic device.

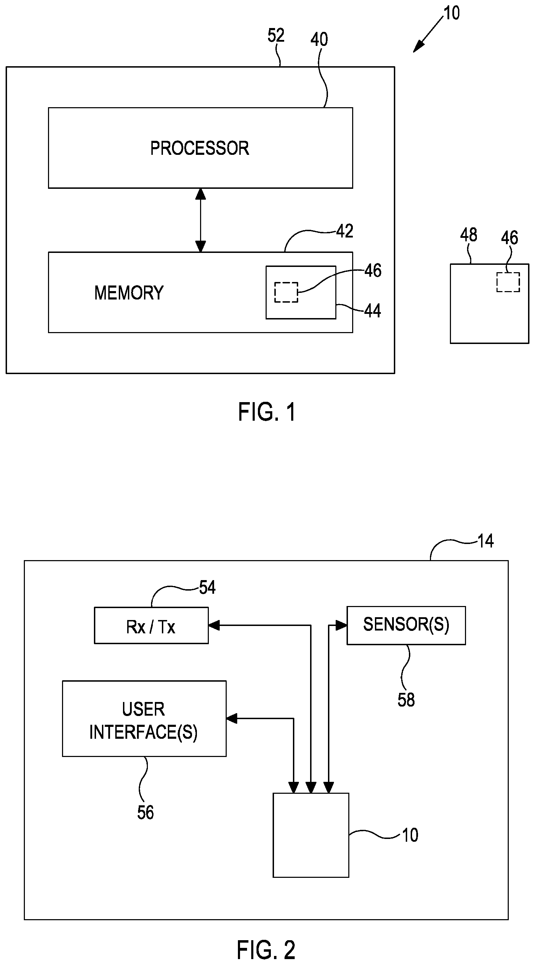

FIG. 1 schematically illustrates an example of an apparatus 10. The apparatus 10 illustrated in the example of FIG. 1 may be a chip or a chip set. In some examples, the apparatus 10 may be provided within electronic devices such as a processing device. In some examples, the apparatus 10 may be provided within an electronic device of a user, such as a smartphone or tablet.

Fig 1 illustrates an example of a controller 52. Implementation of a controller 52 may be as controller circuitry. The controller 52 may be implemented in hardware alone, have certain aspects in software including firmware alone or can be a combination of hardware and software (including firmware).

As illustrated in Fig 1 the controller 52 may be implemented using instructions that enable hardware functionality, for example, by using executable instructions of a computer program 44 in a general-purpose or special-purpose processor 40 that may be stored on a computer readable storage medium (disk, memory etc.) to be executed by such a processor 40.

The processor 40 is configured to read from and write to the memory 42. The processor 40 may also comprise an output interface via which data and/or commands are output by the processor 40 and an input interface via which data and/or commands are input to the processor 40.

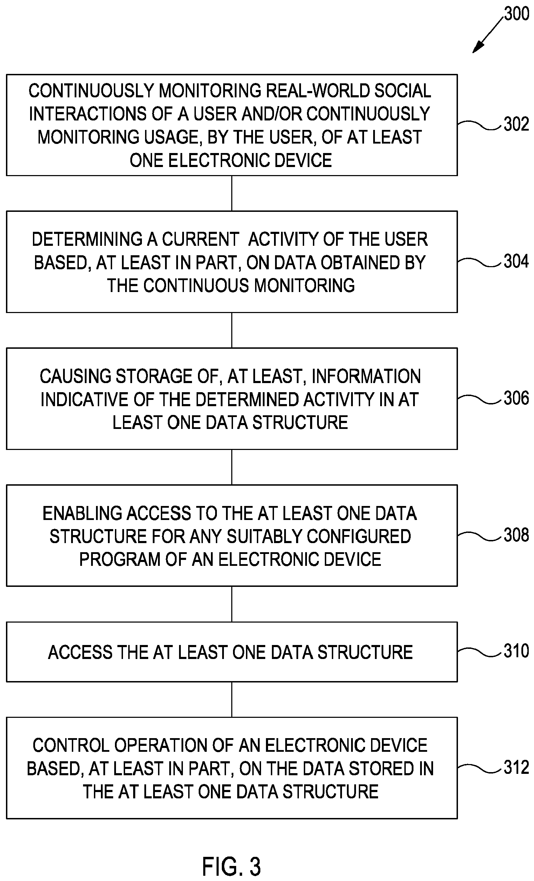

The memory 42 stores a computer program 44 comprising computer program instructions 46 (computer program code) that controls the operation of the apparatus 10 when loaded into the processor 40. The computer program instructions 46, of the computer program 44, provide the logic and routines that enables the apparatus to perform the methods illustrated in FIG. 3. The processor 40 by reading the memory 42 is able to load and execute the computer program 44.

The apparatus 10 therefore comprises:
at least one processor 40; and
at least one memory 42 including computer program code
the at least one memory 42 and the computer program code configured to, with the at least one processor 40, cause the apparatus 10 at least to perform:
   continuously monitoring real-world social interactions of a user and/or continuously monitoring usage, by the user, of at least one electronic device;
   determining a current activity of the user based, at least in part, on data obtained by the continuous monitoring of real-world social interactions of the user and/or continuous monitoring of usage, by the user, of the at least one electronic device;
   causing storage of, at least, information indicative of the determined current activity in at least one data structure; and
   enabling access to the at least one data structure for any suitably configured program of an electronic device to enable any suitably configured program of the electronic device to control operation of the electronic device based, at least in part, on the data stored in the at least one data structure.

As illustrated in FIG. 1, the computer program 44 may arrive at the apparatus 10 via any suitable delivery mechanism 48. The delivery mechanism 48 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 44. The delivery mechanism may be a signal configured to reliably transfer the computer program 44. The apparatus 10 may propagate or transmit the computer program 44 as a computer data signal.

Computer program instructions 46 for causing an apparatus to perform at least the following or for performing at least the following:
continuously monitoring real-world social interactions of a user and/or continuously monitoring usage, by the user, of at least one electronic device;
determining a current activity of the user based, at least in part, on data obtained by the continuous monitoring of real-world social interactions of the user and/or continuous monitoring of usage, by the user, of the at least one electronic device;
causing storage of, at least, information indicative of the determined current activity in at least one data structure; and
enabling access to the at least one data structure for any suitably configured program of an electronic device to enable any suitably configured program of the electronic device to control operation of the electronic device based, at least in part, on the data stored in the at least one data structure.

The computer program instructions 46 may be comprised in a computer program, a non-transitory computer readable medium, a computer program product, a machine readable medium. In some but not necessarily all examples, the computer program instructions 46 may be distributed over more than one computer program.

Although the memory 42 is illustrated as a single component/circuitry it may be implemented as one or more separate components/circuitry some or all of which may be integrated/removable and/or may provide permanent/semi-permanent/ dynamic/cached storage.

Although the processor 40 is illustrated as a single component/circuitry it may be implemented as one or more separate components/circuitry some or all of which may be integrated/removable. The processor 40 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.
This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the FIG. 3 may represent steps in a method and/or sections of code in the computer program 44. The illustration of a particular order to the blocks does not necessarily imply that there is a required or preferred order for the blocks and the order and arrangement of the block may be varied. Furthermore, it may be possible for some blocks to be omitted. For example, block 310 and/or block 312 in Fig 3 can be omitted.

FIG. 2 schematically illustrates an example of an electronic device 14.

In the example of FIG. 2, the electronic device 14 comprises one or more user interfaces 56, one or more transceivers 54, one or more sensors 58 and an apparatus 10 as described in relation to FIG. 1.

FIG. 2 therefore illustrates an electronic device 14 comprising an apparatus 10 as described herein.

In examples, the electronic device 14 can be any suitable personal electronic device 14 of a user 12. For example, the electronic device 14 can be/comprise one or more of a mobile telephone, a smartphone, a tablet device, a laptop, a wearable electronic device, and so on.

In the example of FIG. 2, the apparatus 10 provides means for controlling operation of the electronic device 14. However, in examples, any suitable means for controlling operation of the electronic device 14 can be used.

As illustrated in the example of FIG. 2, one or more of the elements 54, 56 and 58 are operationally coupled to the apparatus 10 and any number or combination of intervening elements can exist between them (including no intervening elements).

In some examples, one or more of the elements 54, 56 and 58 are operationally coupled to each other and/or share one or more components. Additionally, or alternatively, one or more of the elements 54, 56 and 58 may be operationally coupled to and/or share one or more components with other elements not illustrated in the example of FIG. 2.

In examples, the apparatus 10 provides means to control, at least in part, directly or indirectly, operation of the elements 54, 56 and 58. Information may be transmitted between the apparatus 10 and the elements 56, 54 and 58. For example, control information may be transmitted from the apparatus 10 to the elements 54, 56 and 58 and/or information from the elements 56, 54 and 58 transmitted to the apparatus 10.

This is illustrated in the example of FIG. 2 by the double-headed arrows linking the elements 56, 54 and 58 and the apparatus 10.

In examples, any suitable transceiver(s) 54 can be used. In examples, one or more separate receivers and/or transmitters can be used.

The transceivers 54 can comprise one or more radio transceivers 54. The one or more radio frequency transceivers 54 can be configured to transmit and receive radio frequency signals. For example, the one or more radio frequency transceivers 54 can be compatible with one or more short-range radio protocols, such as Bluetooth or Wi-Fi protocols. Alternatively, or additionally, the one or more radio frequency transceivers 54 can be compatible with one or more longer-range radio protocols, such as one or more cellular telephone protocols.

The apparatus 10 is configured to control the one or more transceivers 54 to transmit radio frequency signals comprising data. The apparatus 10 is also configured to receive inputs from the one or more transceivers 54 in the form of data comprised in received radio frequency signals.

The one or more transceivers 54 provide means for transmitting and/or receiving signals comprising data or information.

The one or more sensors 58 can comprise any suitable sensor or sensors 58.

In examples, the one or more sensors 58 are configured to obtain information. For example, the one or more sensors 58 can be configured to obtain information of the user and/or the local environment of the user.

In examples, the one or more sensors 58 can comprise one or more cameras and/or one or more microwave sensors and/or one or more infrared sensors and/or one or more accelerometers and/or one or more gyroscopes, and/or one or more satellite navigation system sensors such as one or more global positioning system (GPS) sensors and so on.

In some examples, the one or more transceivers 54 can be considered to be one or more sensors 58. For example, the one or more transceivers can be used in Wi-Fi and/or Bluetooth scanning.

The one or more user interfaces 56 are configured to receive inputs from a user 12 of the electronic device 14 and/or provide outputs to the user 12 of the electronic device 14.

Any suitable user interface(s) 56 can be used. For example, any suitable user interface(s) 56 configured to allow a user to input information to, for example, control the electronic device 14 and/or output information, in any suitable form, to the user 12 of the electronic device 14 can be used.

In examples, the user interface(s) 56 can comprise one or more of a display, a touch sensitive input (which may be combined with the display), one or more keys, one or more joysticks, one or more speakers, one or more microphones, one or more haptic devices, and so on.

The electronic apparatus 14 can comprise any number of additional elements not illustrated in the example of FIG. 2. Additionally, or alternatively, one or more elements of the electronic apparatus 14 illustrated in the example of FIG. 2 can be integrated and/or combined. For example, the one or more transceivers 54 and the one or more sensors 58 can be combined. Additionally, or alternatively, the one or more user interfaces 56 and the one or more sensors 58 can be combined.

In some examples, one or more of the elements illustrated in the example of FIG. 2 can be omitted from the electronic device 14.

FIG. 3 illustrates an example of a method 300. The method 300 can be performed by the apparatus 10 of FIG. 1 and/or the electronic device 14 of FIG. 2.

Accordingly, in the examples, the apparatus of FIG. 1 and/or the electronic device of FIG. 2 provide means for performing the method 300. However, in examples, any suitable means can be used to perform the method 300.

At block 302, the method comprises continuously monitoring real-world social interactions 16 of a user 12 and/or continuously monitoring usage, by the user 12, of at least one electronic device 14.

Any suitable method for continuously monitoring real-world social interactions 16 of a user 12 and/or continuously monitoring usage, by the user 12, of at least one electronic device 14 can be used.

Continuously monitoring real-world social interactions 16 of the user 12 is, in examples, intended to mean or include monitoring real-world social interactions 16 of the user 12 over an extended period of time such as several hours to several days or longer and/or monitoring real-world social interactions 16 of a user 12 when the user 12 is with an electronic device 14.

As used herein, continuously monitoring is intended to include periodically performing one or more actions to monitor real-world social interactions 16 of a user 12 using a fixed or varying time period. In examples, continuously monitoring real-world social interactions 16 of a user 12 includes performing one or more actions and/or causing performance of one or more actions at an electronic device 14 in the background.

As used herein, real-world social interactions 16 of a user 12 is intended to mean or include social interactions of the user 12 with at least one other person in the real world. In some examples, such interactions can be considered face-to-face interactions.

In examples, continuously monitoring usage, by the user 12, of at least one electronic device 14 is intended to mean or include monitoring and/or recording interactions between the user 12 and the electronic device 14. In examples continuously monitoring usage, by the user 12, of at least one electronic device comprises monitoring actions performed and/or tasks carried out and/or content consumed and/or content created by the user 12 using the electronic device 14.

Continuously monitoring real-world social interactions 16 of a user 12 can, in some examples, be considered independent from actions of the user 12 using the electronic device 14 and continuously monitoring usage, by the user 12, of at least one electronic device 14 can be considered dependent on actions performed by the user 12 using the electronic device 14.

In examples, continuously monitoring real-world social interactions 16 of the user 12 comprises determining one or more people who are co-located with the user 12. Any suitable method for determining one or more people 28 who are co-located with the user 12 can be used.

For example, information from the one or more sensors 58, one or more transceivers 54 and/or one or more user interfaces 56 can be used in determining one or more people 28 who are co-located with the user 12.

In examples, determining one or more people 28 who are co-located with the user 12 is intended to include determining one or more people 28 who are close enough to the user 12 to socially interact with the user 12 in the real world. In examples, determining one or more people 28 who are co-located with the user 12 can be considered to be determining one or more people 28 who are proximate and/or local to and/or in the vicinity of and/or nearby and/or with the user 12 and so on.

In some examples, continuously monitoring real-world social interactions 16 of the user 12 comprises periodically scanning for nearby devices 30 of other users 28. For example, determining one or more people 28 who are co-located with the user 12 can comprise periodically scanning for nearby devices 30 of other users 28.

In examples it is assumed that users 12, 28 are with their devices 14, 30 and therefore that device(s) 30 that are nearby the user's device 14 indicate that one or more people/users 28 are co-located with the user 12.

In examples, nearby is intended to mean devices that are close enough to the user's device 14 to allow the users 28 of those devices 30 to socially interact with the user 12 in the real-world.

Any suitable method for periodically scanning for nearby devices 30 of other users 28 can be used.

For example, the one or more transceivers 54 and/or the one or more sensors 58 of FIG. 2 can be used to periodically scan for nearby devices 30 of other users 28.

In some examples, the one or more transceivers 54 can be used to periodically transmit information to and receive responses from nearby devices 30 of other users 28.

For example, Bluetooth Discovery can be used to scan for nearby devices 30 of other users 28.

Any suitable period of scanning can be used. In some examples, a scanning period can be fixed or can be variable. In some examples, the scanning period or interval of monitoring can be approximately 10 seconds. In some examples, the scanning period or interval of monitoring can be in the range 5-20 seconds.

In examples, it can be determined that one or more people 28 are co-located with the user 12 by determining nearby devices 30 that remain nearby.

In examples, devices can be excluded if their received radio signal strength indicator is less than a predetermined value to filter out people who are too far away from the user 12.

Additionally, or alternatively, devices that are detected a number of times under a threshold value within a predetermined period of time can also be filtered out to avoid, for example, determining people who are passing by the user 12.

In examples, a predetermined signal strength of -90 dBm and/or a predetermined time period of 6 minutes can be used.

However, in examples, any suitable predetermined signal strength values and/or predetermined time value can be used. For example, a predetermined signal strength of over -80dBm and/or in the range -80dBm to -100 dBm can be used. Additionally, or alternatively, a predetermined time period in the range 4 minutes to 8 minutes and/or in the range 2 minutes to 9 minutes and/or in the range 10 seconds to 10 minutes can be used.

In examples, continuously monitoring real-world social interactions 16 of the user 12 comprises identifying at least one other user 28 of a nearby device 30 based, at least in part, on information stored in an electronic device 14 of the user 12 and/or input from the user 12.

Any suitable method for identifying at least one other user 28 of a nearby device 30 can be used.

For example, determining one or more people 28 who are co-located with the user 12 can comprise identifying one or more people 28 associated with device identifiers received by periodically scanning for nearby devices 30 of other users 28.

In examples, a device identifier can be received from nearby devices 30 and mapped to an associated user 28 using information stored in an electronic device 14 of the user 12. For example, identifying at least one other user 28 of a nearby device 30 can comprise mapping information received from the device 30 to a user identification. In examples, the nearby device 30 can already be associate or registered with the user's electronic device 14 and/or has previously connected to the electronic device 14 of the user 12.

In some examples, the user can input, for example by using the one or more user interfaces 56 of FIG. 2, an identification of a user 28 associated with a nearby device 30.

In some examples, following input from the user 12 identifying a user 28 of a nearby device 30, information can be stored in the electronic device 14 of the user 12 to allow automatic identification/mapping of the nearby device 30 to the user 28 that has been identified by the user 12 using user input.

In examples, continuously monitoring real-world social interactions 16 of the user 12 comprises determining a current location of the user 12.

Any suitable method for determining a current location of the user 12 can be used. In examples, determining a current location of the user 12 can comprise determining an absolute and/or relative position. That is, in examples, determining a current location of the user 12 can comprise determining the particular location of the user 12 or determining whether the user is moving and/or has moved from a location.

In examples, the one or more sensors 58 and/or one or more transceivers 54 and/or one or more user interfaces 56 of FIG. 2 can be used in determining a current location of the user 12. For example, any suitable positioning mechanism such as one or more satellite positioning systems can be used in determining a current location of the user.

In some examples, determining a current location of the user 12 comprises periodically scanning for wireless access points 32.

Any suitable method for periodically scanning for wireless access points can be used.

For example, the one or more transceivers 54 and/or the one or more sensors 58 of FIG. 2 can be used to periodically scan for wireless access points.

In some examples, the one or more transceivers 54 can be used to periodically transmit information to and receive responses from wireless access points.

In examples, any suitable wireless access points can be used, for example Wi-Fi access points.

Any suitable period of scanning can be used. In some examples, a scanning period can be fixed or can be variable. In some examples, the scanning period or interval of monitoring can be approximately 10 seconds. In some examples, the scanning period or interval of monitoring can be in the range 5-20 seconds.

In some examples, determining a current location of the user 12 comprises controlling one or more sensors 58 of an electronic device 14.

For example, movement of the user can be determined using one or more sensors 58 of the electronic device 14.

In examples, variance of acceleration magnitude over a predetermined period of time can be used. In examples, any suitable period of time can be used, for example approximately 1 second.

In some examples, to account for movements of the user's electronic device 14 from, for example, use of the device 14, the average values of the determined variance values over a predetermined period of time can be used.

Any suitable period of time can be used, for example approximately 1 minute.

In examples, movement of the user device 14 can be detected based, at least in part, on acceleration magnitude determined at predetermined intervals, for example 1 second intervals.

In some examples, it is determined if the user is stationary based, at least in part, on the determined acceleration magnitudes.

In examples, the number of stationary or non-moving intervals, such as 1 second intervals, within a monitoring time period can be used to determine if the user's electronic device 14, and therefore the user, is stationary.

Any suitable limits for the number of stationary or non-moving intervals and the monitoring time period can be used.

In examples the monitoring time period can be in the range 30 seconds to 120 seconds and/or in the range 45 seconds to 90 seconds and/or in the range 50 seconds to 75 seconds and so on. In some examples the monitoring time period can be substantially 60 seconds.

In some examples the number of stationary or non-moving intervals in the monitoring time period used to determine that the user's electronic device 14 is stationary is in the range 50% to 90%. For example, above 50% or above 60% or above 67% or above 75% or above 83% and so on.

For example, when 40 or more stationary or non-moving intervals are determined in a monitoring period of 60 seconds it is determined that the user's electronic device 14 is stationary.

However, in some examples, additional or alternative methods for determining if the user's electronic device 14, and therefore the user, is moving is/are useful.

In some examples, data/information received from periodic scanning for wireless access points can be compared to determine if the user 12 is moving. For example, it can be determined if the wireless access points that are contactable change over time indicating whether the user 12 is moving.

This can be advantageous as this can represent a low power, background method of determining whether the user 12 is moving, conserving energy resources, for example, of an electronic device 14.

In some examples, information, such as identification information, received from one or more wireless access points can be used in determining a current activity of the user 12 (block 304 of method 300).

At block 304 the method 300 comprises determining a current activity 18 of the user 12 based, at least in part, on data 20 obtained by the continuous monitoring of real-world social interaction 16 of the user 12 and/or continuous monitoring of usage, by the user 12, of the at least one electronic device 14.

Any suitable method for determining a current activity 18 of the user 12 can be used. For example, the data received from continuously monitoring real-world social interactions 16 of the user 12 and/or continuously monitoring usage, by the user 12, of at least one electronic device 14 can be used in any suitable way to determine a current activity 18 of the user 12.

In examples, determining a current activity 18 of the user 12 comprises segmenting data 20 obtained by the continuous monitoring of real-world social interactions 16 of the user 12 and/or continuous monitoring of usage, by the user 12, of the at least one electronic device 14.

In examples, the data can be segmented in any suitable way. In some examples, the data is segmented into portions identifying an activity of the user, such as meeting, meal, conversation, seminar, lecture, shopping, work, sporting activity, hangout and so on.

That is, in examples, the data obtained by the continuous monitoring of block 302 can be segmented, in any suitable way, into different identified activities of the user 12.

In examples, the data 20 is segmented based, at least in part, on the person or people 28 who are co-located with the user 12 and/or the location of the user 12. In examples, the location of the user 12 is intended to include movement of the location of the user 12.

For example, the data 20 can be segmented based, at least in part, when there is a change in the person or people who the user 12 is co-located with. Additionally, or alternatively, the data 20 can be segmented based, at least in part, on the movement and/or location of the user 12 and co-located person or people 28.

In some examples, the data 20 is segmented based, at least in part, on periods of time that the user 12 remains co-located with at least one other person 28.

In examples, the at least one other person 28 is a user 12 of a nearby device 30 identified as discussed in relation to block 302.

This can be advantageous as, in examples, a change of activity of the user 12 can be accompanied with a change of the person or people 28 that the user is with.

In examples, determining a current activity 18 of the user 12 comprises using a model. In examples, any suitable model can be used.

For example, any suitable model that takes data 20 obtained by the continuous monitoring (block 302) as input and outputs a current activity of the user 12 can be used.

In some examples, determining a current activity 18 of the user 12 comprises using a model that takes, as inputs, at least one of: who the user is currently with, the current time and the current location of the user 12 and outputs a current activity 18 of the user 12.

In examples, who the user 12 is currently with and/or the current location of the user 12 can be determined as discussed in relation to blocks 302 and 304.

The current time can be determined in any suitable way, for example by receiving one or more signals comprising information.

In examples, the model can be trained using the user's activity history and machine learning classifiers. Accordingly, in some examples, the model can become more accurate and/or efficient as the model is used over time to identify activities of the user 12 and/or as information on the activities of the user 12 is obtained.

In examples, the user 12 can provide input, using the one or more user interfaces 56 for example, to provide the initial information to allow the model to operate. For example, the user 12 can provide information on one or more of: a current activity 18, identities of co-located other people 28, information on the user's relationships with co-located other people, and so on.

Examples of possible relationship categories are family, friend, partner, romantic interest, spouse, colleague, boss, teacher and so on.

In examples, the information input by the user 12 can be stored for use by the model. For example, the identities of other people 28 and the corresponding relationship categories can be stored for automatic association with co-located users 28 and user devices 30.

The relationships of the user 12 with the co-located person or people 28 can be used in the determination of the current activity 18 of the user 12. For example, where it is determined that all co-located people 28 are work colleagues it can be determined that the user 12 is or is likely to be in a work meeting.

In examples where there are multiple co-located people 28, the relationship can be determined based on majority voting or group-wide relationship mapping.

In examples, the location of the user 12 can additionally or alternatively be used in the determination of the current activity 18 of the user 12.

For example, where it is determined that all co-located people 28 are work colleagues and that the user 12 is located away from the workplace, it can be determined that the current activity 18 is or is more likely to be a non-work activity, such as a meal.

In examples, the user's activity history with other people 28 can be used in the determination of the current activity 18 of the user 12. For example, the user may be more friendly with certain colleagues than others, and such information can be used in the determination of the current activity 18 of the user 12.

Accordingly, in examples, the user's activity history with co-located people 28 can be used in determining the current activity 18 of the user 12.

In some examples, the usage, by the user 12, of an electronic device 14 can be used in determining a current activity 18 of the user 12. For example, content created and/or consumed and/or actions performed can be used in determining a current activity 18 of the user 12.

In examples the model calculates a confidence value associated with a determination of a current activity of the user 12. In some examples, a data segment is labelled with the determined activity when the confidence value is above a predetermined value, for example 0.8 or 80%.

In some examples the predetermined value for the confidence value can be dynamically configured by a system manager and/or a user.

In examples, the subsequent activity or activities of a user 12 can be used in determining or identifying an earlier user activity. Accordingly, in examples, determination of a current activity 18 of the user 12 can occur while the activity is taking place or later.

In some examples, future activities of the user 12 can be estimated based, at least in part, on the determined activities of the user 12.

In some examples, the user 12 can, at least initially, be requested to confirm that determined information and/or a determined current activity is correct.

At block 306, the method comprises causing storage of, at least, information indicative of the determined current activity 18 in at least one data structure 24.

Any suitable method for causing storage of, at least, information indicative of the determined activity 18 in at least one data structure 24 can be used. For example, information can be stored in memory 42.

In examples, any suitable information of and/or associated with and/or describing the current activity 18 can be stored such as an identification of the activity, associated time periods, associated co-located people 28, associated location, and so on.

In examples, the at least one data structure 24 can take any suitable form. For example, the at least one data structure 24 can take the form of one or more databases.

At block 308, the method 300 comprises enabling access to the at least one data structure 24 for any suitably configured program of an electronic device 14 to enable any suitably configured program of the electronic device 14 to control operation of the electronic device 14 based, at least in part, on the data 20 stored in the at least one data structure 24.

In examples, any suitable method for enabling access to the at least one data structure 24 can be used.

In examples, a suitably configured program is intended to be or include any program that has been configured to access the at least one data structure 24 to access data 20 in the at least one data structure 24.

In examples, such a program can be considered a program that has been separately created from the program 44 configured to perform the method 300. In examples, the suitably configured program or programs can take the form of one or more applications that have been separately created and, for example, downloaded/installed on the electronic device 14.

In examples, a suitably configured program can take the form of an operating system of an electronic device 14 that is configured to interface with and access he at least one data structure 24.

That is, in examples, the suitably configured program may be different from and separate to a program 44 controlling functionality of the method 300.

In examples, enabling access to the at least one data structure 24 comprises providing at least one interface 34 to enable any suitably configured program of an electronic device 14 to access the data 20 in the at least one data structure 24.

In examples, the at least one interface 34 can take any suitable form.

In some examples, enabling access to the at least one data structure 24 comprises providing at least one application program interface, API (36). In examples, any suitable API can be provided to enable access to data 20 or information stored in the at least one data structure 24.

Examples of APIs that can be provided are as follows.

One or more APIs can be provided to return the current activity 18 of the user 12.

One or more APIs can be provided to return an activity of the user 12 at selected time.

One or more APIs can be provided to retrieve a set of activities of the user 12 satisfying given conditions. Example conditions are time range, membership, activity type and location. In examples, the membership element has an additional argument, specifying the matching type, along with a specific set of members.

In examples matching type can be exact, partial or inclusion to retrieve activities that have the exact specified membership, a partial match to the specified membership and a membership that fully includes the specified membership respectively.

In examples, one or more APIs can be provided to return aggregation information on a collection of a retrieved set of activities. Examples are a total activity count, total time spent, total number of people and so on.

One or more APIs can be provided to return similar information for activity sequences. One or more APIs can be provided to allow the returned sequences of activities to be interrogated.

One or more APIs can be provided to return an estimated next activity of the user 12. An associated confidence value can also be provided.

One or more APIs can be provided to return an estimated activity of the user 12 at a selected time. An associated confidence value can also be provided.

Enabling access to the at least one data structure 24 is advantageous as, for example, it allows any suitably programmed application or computer program to control the electronic device 14 based, at least in part, on the activities of the user 12 while making use of the accurate and efficient determination of the information described herein and without the need for the separate program or application to determine that information itself.

This provides for efficient and effective provision and use of information to allow control of an electronic device 14.

Furthermore, this provides for a saving of resources of an electronic device 14 as, for example, it provides for such control of an electronic device 14 while avoiding multiple applications/programs individually and separately consuming device resources to monitor and determine the activities of the user 12.

At block 310 the method comprises accessing the at least one data structure 24.

Any suitable method for accessing the at least one data structure 24 can be used. For example, accessing the at least one data structure 24 can comprise using at least one interface 34 provided. For example, an application stored on the electronic device 14 can access the at least one data structure 24.

At block 312 the method comprises controlling operation of an electronic device 14 based, at least in part, on the data 20 stored in the at least one data structure 24.

Accordingly, in examples, the method 300 comprises accessing the at least one data structure 24 and controlling operation of an electronic device 14 based, at least in part, on the data 20 stored in the at least one data structure 24.

Any suitable method for controlling operation of an electronic device 14 based, at least in part, on the data 20 stored in the at least one data structure 24 can be used.

In examples, any suitable functionality or control of the electronic device 14 can be affected by the data 20 stored in the at last one data structure 24. For example, control of the electronic device 14 can be affected by or tailored to a current activity 18 of the user 12.

In examples, control and operation of the electronic device 14 comprises preventing display of at least one notification 38 on the electronic device 14.

This is advantageous as, for example, the user 12 of the electronic device 14 may receive a personal, private message containing personal information whilst in a work meeting with colleagues. Using the inventive method described herein, a notification of such a message can be prevented from being displayed while the user 12 is in the work meeting to protect the privacy and security of the user's information.

However, any suitable control of the electronic device 14 based on the data 20 stored in the at least one data structure 24 can be used.

In examples, information and/or content on an electronic device 14 of the user 12 can be organized and/or sorted and/or filtered and/or controlled based, at least in part, on data 20 stored in the at least one data structure 24, such as a current activity of a user 12.

For example, content, such as photographs, taken and/or stored on an electronic device 14 of a user 12 can be automatically organized based, at least in part, on the current activity 18 of the user 12. This is advantageous as it provides, for example, for an improved man-machine interface, allowing efficient use of the electronic device 14 by, for example, reducing the amount of inputs a user 12 has to make to find content, such as images, appropriate to a current activity or social context.

Additionally, or alternatively, certain content, such as private images for example, can be hidden or obscured based, at least in part, on data 20 stored in the at least one data structure 24, such as the current activity of the user 20. For example, private images of a user 12 can be automatically hidden or obscured during work meetings and/or when the user is sharing access to the electronic device 14 with work colleagues.

This is advantageous as it provides automatic protection of private information of a user providing a secure and safe electronic device 14.

As another example, recommendations can be provided to a user 12 based, at least in part, on the data 20 stored in the at least one data structure, such as the current activity 18 and/or the previous activity of the user 12.

For example, an application can make recommendations or suggestions of activities that the user 12 and the currently co-located people 28 can do based, at least in part, on their history of activities and/or their most recent activities. This is advantageous as it can assist groups of people to make a decision, which can, in some circumstances, be difficult.

For example, a user 12 (Bob) and two friends, John and Mike, who often hang out together on a Friday night, leave a movie and the service suggests visiting a recently-opened pub which has a similar style to their favourite pub.

The data 20 stored in the at least one data structure 24 can also or alternatively serve as and/or enable creation of a social lifelog, accessible to allow a user 12 to easily view experiences shared with another person or people, such as a partner or spouse.

For example, a diary application of an electronic device 14 of the user 12 can access the data 20 stored in the at least one data structure 24 and automatically log activities of the user and their spouse, for example, to create diary entries. In examples, the entries can include, for example, photographs taken and/or songs listened to together.

In examples, messenger application(s) can be controlled based, at least in part, on the data 20 stored in the at least one data structure 24, such as the current activity of the user 12. For example, an application can provide a list of friends or colleagues who are not present and suggest interactions with those people. In examples, an electronic device 14 of a user 12 can be controlled to allow easy communication with such people, by for example, providing one or more user interface elements allowing simple and efficient contact with those people.

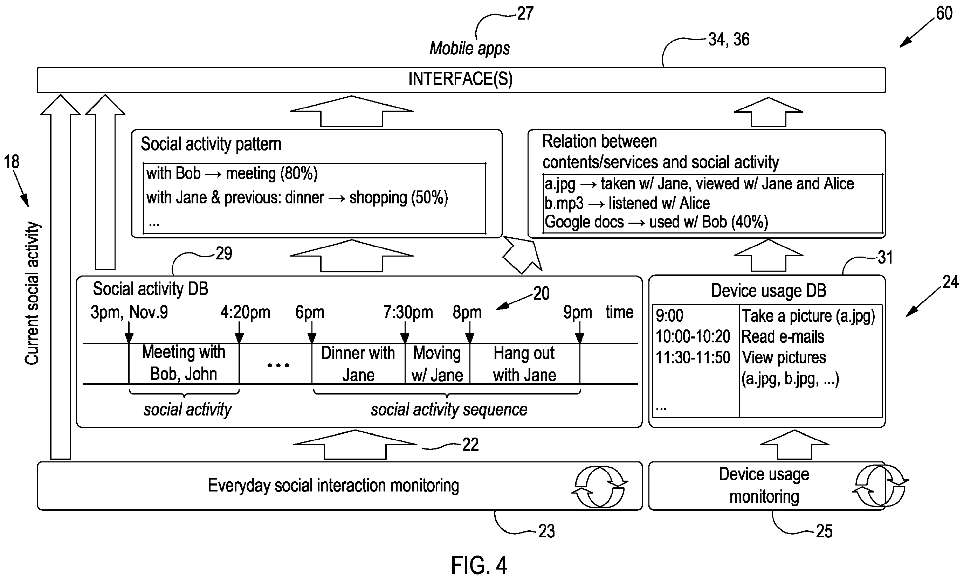

FIG. 4 illustrates an example of a high-level architecture 60.

In examples, the high-level architecture 60 is associated with the method 300 described in relation to FIG. 3. Data flow in the architecture of FIG. 4 is indicated by the block arrows.

Underlying the system architecture in FIG. 4 is the everyday social interaction monitoring 23 and device usage monitoring 25. In examples, these can be performed as described in relation to block 302 of the method 300.

As can be seen in Fig. 4, information from everyday social interaction monitoring 23 is stored in a data structure 24 which, in the example of FIG. 4, takes the form of a social activity database 29. The information can include information indicative of a determined current activity 22.

Information from device usage monitoring 25 is stored in a data structure 24 which, in the example of FIG. 4, takes the form of a device usage database 31. Accordingly, the data structures 24 in the example of FIG. 4 are a social activity data-base 29 and a device usage data-base 31.

In the example of FIG. 4, an interface 34, in the form of a plurality of APIs 36, is provided and information can be passed from everyday social interaction monitoring 23 to the interfaces 34, 36 in the form of the current social activity 18.

In addition, information can be passed from the social activity database 29 to the interfaces 34, 36.

This allows suitably configured programs, in this example in the form of mobile applications 27, to access the information.

It can be seen from the illustrated social activity database that the data 20 has been segmented into a number of activities such as "meeting with Bob, John" and "dinner with Jane".

It can be seen from the illustrated device usage database that the usage of the device at different times has been recorded such as "9:00 am" "Take a picture (a.jpeg)" and "10:00 am - 10:20 am" "Read e-mails".

It can also be seen in the architecture of FIG. 4 that analysis of the stored data 20 in the social activity database 29 is provided in the form of activity patterns and access to this information is also provided to the mobile applications 27 via the interfaces 34, 36.

In the example of FIG. 4, such activity patterns are determined from the stored data 20. In the example of FIG. 4 it is indicated that if the user 12 was determined to be with Bob there is an 80% chance that the user 12 will attend a meeting. Similarly, it is indicated that if the user 12 is with Jane and has previously been at dinner there is a 50% chance that the user 12 will go shopping.

Similarly, analysis of the data 20 in the social activity database and device usage database can be performed to record the relationship between the two.

As illustrated in the architecture 60 of FIG. 4, the picture (a.jpeg) taken at 9:00 am was taken with Jane and viewed with Jane and Alice. Similarly, a music file (b.mp3) was listened to with Alice.

The provision of this information via the interfaces 34, 36 enables the mobile applications 27 to effectively control operation of the user's electronic device 14 based, at least in part, on the information in the architecture 60.

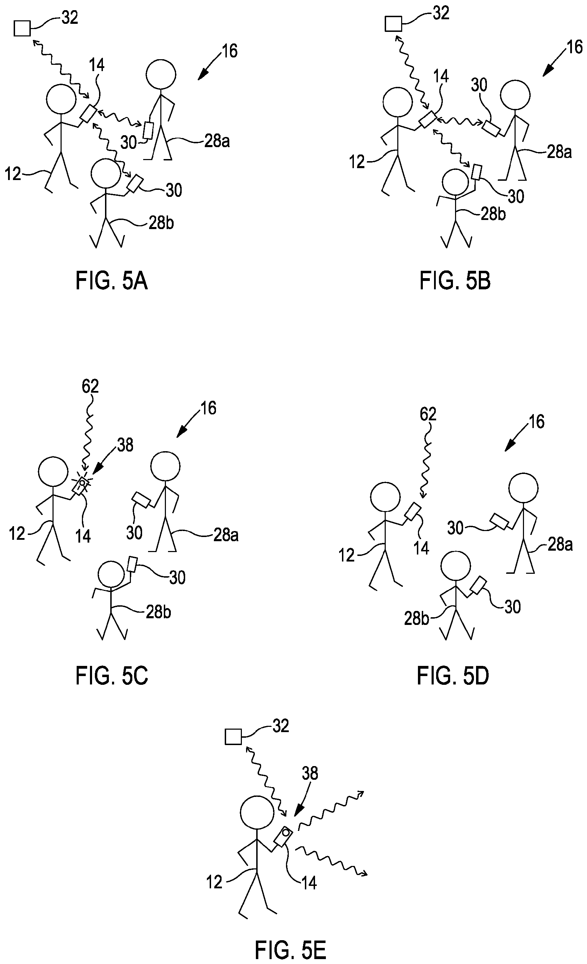

FIG. 5 illustrates an example of a scenario.

In the example of FIG. 5, a user 12 has an electronic device 14 in which the inventive method described herein is implemented.

For example, the user 12 has an electronic device 14 as described in relation to FIG. 2 and/or an electronic device 14 comprising the apparatus as described in relation to FIG. 1.

The example of FIG. 5 is split into 5 sections, A to E. Parts A to E of FIG. 5 can be considered FIGS 5A to 5E respectively.

In part A of FIG. 5 a real-world social interaction 16 of the user 12 is illustrated.

In the example of FIG. 5A the user 12 is with two other people 28a, 28b each having their own device 30.

In addition, the user 12, in the example of FIG. 5A, is nearby a Wi-Fi access point 32.

In FIG. 5A information is passed between the user's device 14 and the other peoples' devices 30 allowing the user's device 14 to determine that the user 12 is with the user's work colleagues, Tom (28a) and Bob (28b). In addition, in the example of FIG. 5A, information is passed between the user's device 14 and the access point 32 allowing the user's device 14 to determine that it is nearby the access point 32.

The device 14 of the user 12 determines that the user 12 is co-located with Bob and Tom and, based on this determination and the current time, determines that the user 12 is in a work meeting. Accordingly, the device 14 of the user 12 records the current activity of the user as work meeting with Bob and Tom.

FIG. 5B illustrates the same situation at a later time. It can be seen in the example of FIG. 5B that the user 12 remains with Bob and Tom and nearby the access point 32.

Accordingly, the user's device 14 determines, via the exchange of information with devices 30 and access point 32, that the user 12 is still in a work meeting with Bob and Tom.

In FIG. 5C the user's device 14 receives a wireless signal 62 comprising information. In the example of FIG. 5C the user's device 14 receives a message from another work colleague. As the message is from a work colleague the device 14 allows display of a notification 38 of the received message.

In FIG. 5D the user 12 receives a further signal 62 comprising information. In FIG. 5D the signal comprises a message from a family member of the user 12.

In the example of FIG. 5D, the notification 38 of the message is prevented as the user 12 is in a work meeting and therefore, to protect the privacy and security of the user's information, no notification 38 of the message is provided.

In the example of FIG. 5E further time has passed, the work meeting is over and Bob and Tom have left. The user 12 is therefore on his own.

The user's device 14 is aware that the other two have left as their devices 30 are no longer contactable.

Accordingly, the device 14 determines that the user 12 is no longer in a work meeting and, therefore, in FIG. 5E, allows presentation of the notification 38 of the received message.

It can be seen, therefore, that a technical benefit provided is enabling efficient and accurate control of an electronic device 14 of a user which can, for example, protect the security and privacy of a user 12.

Where a structural feature has been described, it may be replaced by means for performing one or more of the functions of the structural feature whether that function or those functions are explicitly or implicitly described.

The recording of data may comprise only temporary recording, or it may comprise permanent recording or it may comprise both temporary recording and permanent recording, Temporary recording implies the recording of data temporarily. This may, for example, occur during sensing or image capture, occur at a dynamic memory, occur at a buffer such as a circular buffer, a register, a cache or similar. Permanent recording implies that the data is in the form of an addressable data structure that is retrievable from an addressable memory space and can therefore be stored and retrieved until deleted or over-written, although long-term storage may or may not occur. The use of the term 'capture' in relation to an image relates to temporary recording of the data of the image. The use of the term 'store' in relation to an image relates to permanent recording of the data of the image.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:
continuously monitoring real-world social interactions of a user and/or continuously monitoring usage, by the user, of at least one electronic device;
determining a current activity of the user based, at least in part, on data obtained by the continuous monitoring of real-world social interactions of the user and/or continuous monitoring of usage, by the user, of the at least one electronic device;
causing storage of, at least, information indicative of the determined current activity in at least one data structure; and
enabling access to the at least one data structure for any suitably configured program of an electronic device to enable any suitably configured program of the electronic device to control operation of the electronic device based, at least in part, on the data stored in the at least one data structure.

2. An apparatus as claimed in claim 1, wherein continuously monitoring real-world social interactions of the user comprises determining one or more people who are co-located with the user.

3. An apparatus as claimed in claim 1 or 2, wherein continuously monitoring real-world social interactions of the user comprises periodically scanning for nearby devices of other users.

4. An apparatus as claimed in claim 3, wherein continuously monitoring real-world social interactions of the user comprises identifying at least one other user of a nearby device based, at least in part, on information stored in an electronic device of the user and/or input from the user.

5. An apparatus as claimed in any preceding claim, wherein continuously monitoring real-world social interactions of the user comprises determining a current location of the user.

6. An apparatus as claimed in claim 5, wherein determining a current location of the user comprises controlling one or more sensors of an electronic device.

7. An apparatus as claimed in any preceding claim, wherein determining a current activity of the user comprises segmenting data obtained by the continuous monitoring of real-world social interactions of the user and/or continuous monitoring of usage, by the user, of the at least one electronic device.

8. An apparatus as claimed in claim 7, wherein the data is segmented based, at least in part, on periods of time that the user remains co-located with at least one other person.

9. An apparatus as claimed in any preceding claim, wherein determining a current activity of the user comprises using a model that takes, as inputs, at least one of: who the user is currently with, the current time and the current location of the user and outputs the current activity of the user.

10. An apparatus as claimed in any preceding claim, wherein enabling access to the at least one data structure comprises providing at least one interface to enable any suitably configured program of an electronic device to access data in the at least one data structure.

11. An apparatus as claimed in any preceding claim, wherein enabling access to the at least one data structure comprises providing at least one application program interface.

12. An apparatus as claimed in any preceding claim, wherein the means are further configured to:
access the at least one data structure and control operation of an electronic device based, at least in part, on the data stored in the at least one data structure.

13. An apparatus as claimed in any preceding claim, wherein controlling operation of the electronic device comprises preventing display of at least one notification on the electronic device.

14. A method comprising:
continuously monitoring real-world social interactions of a user and/or continuously monitoring usage, by the user, of at least one electronic device;
determining a current activity of the user based, at least in part, on data obtained by the continuous monitoring of real-world social interactions of the user and/or continuous monitoring of usage, by the user, of the at least one electronic device;
causing storage of, at least, information indicative of the determined current activity in at least one data structure; and
enabling access to the at least one data structure for any suitably configured program of an electronic device to enable any suitably configured program of the electronic device to control operation of the electronic device based, at least in part, on the data stored in the at least one data structure.

15. A computer program that, when run on a computer, performs:
continuously monitoring real-world social interactions of a user and/or continuously monitoring usage, by the user, of at least one electronic device;
determining a current activity of the user based, at least in part, on data obtained by the continuous monitoring of real-world social interactions of the user and/or continuous monitoring of usage, by the user, of the at least one electronic device;
causing storage of, at least, information indicative of the determined current activity in at least one data structure; and
enabling access to the at least one data structure for any suitably configured program of an electronic device to enable any suitably configured program of the electronic device to control operation of the electronic device based, at least in part, on the data stored in the at least one data structure.
